# EUROPEAN PATENT SPECIFICATION

(11) **EP 3 844 007 B1**
(45) Date of publication and mention of the grant of the patent: **04.01.2023**
(21) Application number: 19871221.8
(22) Date of filing: 11.10.2019
(51) Int. Cl.: B60H 1/00, B60H 1/24, B60K 37/04, B60R 11/02, H04B 1/036

(54) **COOLED MOBILE DEVICE MOUNTING SYSTEM FOR A VEHICLE**
MONTAGESYSTEM FÜR EINE GEKÜHLTE MOBILE VORRICHTUNG FÜR EIN FAHRZEUG
SYSTÈME DE MONTAGE DE DISPOSITIF MOBILE REFROIDI DESTINÉ À UN VÉHICULE

(30) Priority: 12.10.2018 US 201862744838 P
(43) Date of publication of application: 07.07.2021
(73) Proprietor: MAGNA INTERNATIONAL INC, Aurora, Ontario L4G 7K1 (CA)
(72) Inventor: SCHLEICHER, Daniel, 4300 St. Valentin (AT)
(74) Representative: Glawe, Delfs, Moll
(86) International application number: PCT/CA2019/051455
(87) International publication number: WO 2020/073137

(56) References cited:
- WO-A1-2015/040841
- DE-A1-102011 000 924
- DE-B3-102013 003 447
- JP-A- H1 191 451
- JP-A- 2013 129 410
- JP-A- 2013 129 410
- JP-A- 2013 220 740
- US-A1- 2013 273 824
- US-B1- 9 641 207
- US-B1- 10 279 645

## Description

### TECHNICAL FIELD

The presentinvention relates to a system for mounting and cooling a mobile device in a vehicle.

### BACKGROUND OF THE INVENTION

Mobile devices and automotive vehicles are in common use. Due to frequent usage demands of mobile devices both during and outside of use within a motor vehicle, the ability to charge a mobile device within a vehicle is a common feature included in motor vehicles, either as part of an integral charging provided with the vehicle to consumers, or as an aftermarket feature sold separately and installed by the user or a technician.

Mobile devices may be charged in automotive vehicles via a USB cable or other cable that connects to the charging port of the mobile device, with the cable typically being plugged into a USB port of the vehicle, or plugged into a USB adapter that is plugged into a corresponding power port provided in the vehicle.

Mobile devices may also be charged in vehicles via wireless charging, a common standard of which is the Qi wireless charging standard, which is compatible with a number of smartphone and mobile device models.

Mobile device usage generates heat during use, which can be undesirable to the user. Temperature increases in mobile devices can also be detrimental to the life-span of the device, having detrimental results on the battery life and other components housed within the device. Heat can also be generated at a greater rate when the device is under heavy usage, which can often occur during vehicle use, such as when using navigation applications. For instance, during use of a navigation application, the device may be constantly downloading maps and traffic data. Additionally, the application may require that the screen remain illuminated to display the information generated by the app to aid the user in navigation. Mobile device usage increases when the screen is on, causing increased battery drain and heat generation.

Heat is also generated during the charging of the device, in addition to during the use of the device. Due to power demands of applications such as navigation applications as well as other applications frequently used during vehicle use, it may be desirable to keep the device in a charging state, to prevent the device from a drained battery condition at the conclusion of vehicle use.

While both wired charging and wireless charging are possible for many mobile devices, in many cases higher currents flow during wireless charging. The higher currents, combined with higher losses commonly associated with wireless charging, the warming of the device may be higher for wireless charging. Wireless charging may be more desirable for users in a vehicle, due to the increased convenience and elimination of a wire running between the device and a location on the console, which tethers the device to the vehicle. In many cases, the wire may need to be unplugged and re-plugged to the charging cable in order to use the device and can be inconvenient to constantly re-plug the device, and in many cases the device will remain unplugged.

WO 2015/040841 A1 discloses a terminal installation structure for a vehicle with a heat radiating portion, wherein heat of the back surface of a terminal device is transmitted between the back surface of the terminal device and a terminal mounting surface. JP 2013 129410 A discloses an instrument panel for a vehicle with a supporting member which guides air toward the back surface of a display. JP HI 1 91451 A discloses a cool box for an instrument panel of a vehicle, which directs cold wind from an air-conditioner to a mobile phone. JP 2013 220740 A discloses a vehicle interior, wherein a portable electronic device is cooled with the cold wind from a blower outlet. DE 10 2013 003447 B3 discloses a device for an instrument panel of a vehicle, for holding and cooling a communication device in a device holder.

In view of the foregoing, there remains a need for improvements to mobile device mounting systems in vehicles.

### SUMMARY OF THE INVENTION

The invention provides a system for mounting and cooling a mobile device in a vehicle with the features of independent claim 1. Advantageous further embodiments are defined in the dependent claims.

### BRIEF DESCRIPTION OF THE DRAWINGS

Other advantages of the present invention will be readily appreciated, as the same becomes better understood by reference to the following detailed description when considered in connection with the accompanying drawings wherein:
Figure 1 is a schematic view of a vehicle interior, illustrating air outlets from a HVAC system and a center console for providing mounting structure for a mobile device;
Figure 2 is a schematic view of the HVAC system and air passageways leading the center console and the air outlets, including a device air passageway for providing forced air to the mounting structure;
Figure 3 is an enlarged view of the mounting structure, the air passageways, and the air outlets including a supplemental air outlet, along with a wireless charging unit disposed adjacent the mounting structure and the supplemental air outlet;
Figure 4 is an enlarged view of the mounting structure and the supplemental air outlet, illustrating a flap portion disposed at the supplemental air outlet, with the flap portion in a closed positon and a mobile device prior to being mounted on the mounting structure; and
Figure 5 is an enlarged view of the mounting structure and the supplemental air outlet, with the flap portion in an open position when the mobile device is mounted on the mounting structure, and further illustrating nubs on the mounting structure that space the mobile device away from the mounting structure and allow the forced air to flow around the mobile device.

### DESCRIPTION OF THE ENABLING EMBODIMENT

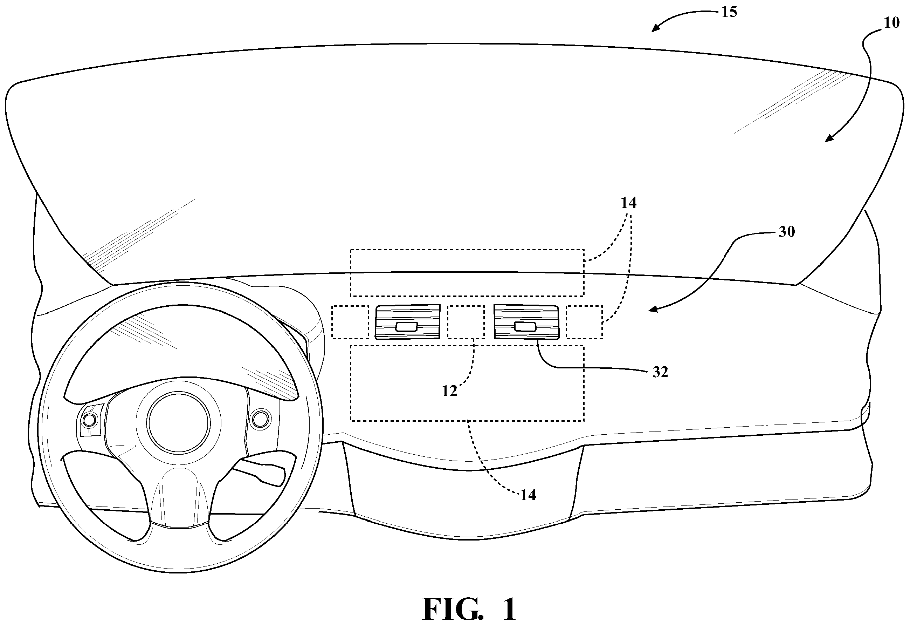

Referring to Figures 1-5, a mobile device mounting system 10 is provided for use in a vehicle that can provide cooling and charging functionality. The system 10 includes a mounting structure 12 adapted to be attached to an interior vehicle structure 14 of a vehicle 15 comprising an HVAC system 16. The system 10 may further include a wireless charging unit 18.

The mounting structure 12 is configured to secure a mobile device 20 thereto. The mounting structure 12 may include a wireless charging unit 18, which may be integrated into the structure of the mounting structure 12. Accordingly, when secured to the mounting structure 12, the mobile device 20 will therefore be charged via the wireless charging capability of the wireless charging unit 18 if the mobile device 20 includes wireless charging capability.

In one approach, the mounting structure 12 may include surrounding structure 12a, which may be in the form of arms (not shown) that are configured to grasp the mobile device 20 and secure the mobile device 20 in place relative to the mounting structure 12. The arms may be moveable into and out of engagement with the mobile device 20. The surrounding structure 12a may also be in the form of a band or snap-fit type structure, or may be in the form of a casing that leaves space around the mobile device 20. It will be appreciated that other forms of securing the mobile device 20 in place may also be used.

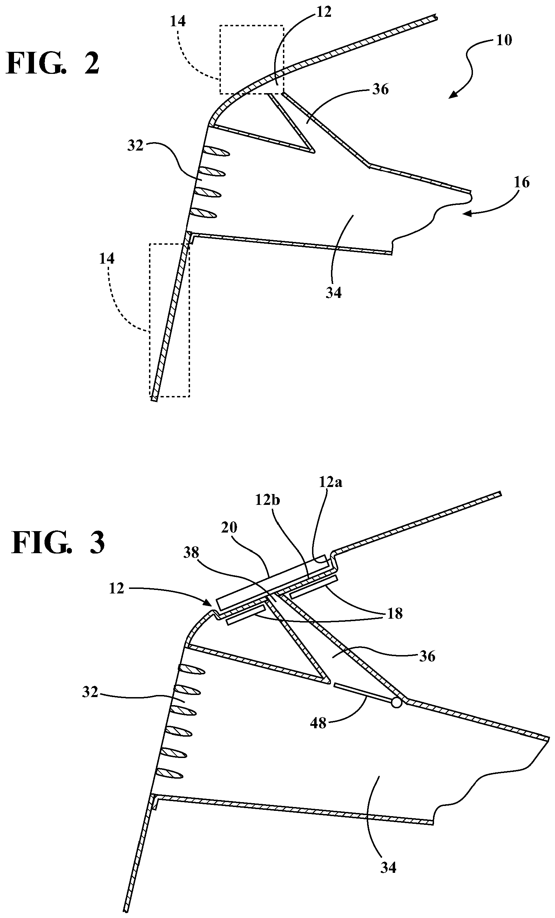

With reference to Figure 3-5, the mounting structure 12 includes a base surface 12b, against which the mobile device 20 may be placed when secured with the mounting structure 12. The base surface 12b may be larger or smaller than the mobile device 20 expected to be used with the mounting structure 12. In the case of the base surface 12b being smaller than the mobile device 20, the mounting structure 12 may not include the surrounding structure 12a. The base surface 12b may be generally flat to conform to a corresponding surface of many common mobile devices, or the base surface 12b may include other shapes or structure to conform to other corresponding surfaces or shapes of the expected mobile device 20. It will be appreciated that the reference to the base surface 12b being flat is in reference to the general profile of the base surface 12b, and that the base surface 12b may include additional protruding structure (described in further detail below) to space the mobile device 20 away from the flat portions of the surface 12b, thereby creating air channels that create turbulences for improved heat transfer.

The mounting structure 12 may alternatively, or additionally, include a magnetic element (not shown) disposed on or within the base surface 12b. The magnetic element may be configured to cooperate with corresponding magnetic material of the mobile device 20, thereby utilizing the cooperating magnetic properties of the device 20 and the mounting structure 12 to retain the mobile device 20 on the mounting structure 12.

In the case where the magnetic element is used, the surrounding structure 12a may be excluded from the mounting structure 12, with the retention being accomplished primarily by the magnetic element. However, it may alternatively be desirable to use the securing abilities of both the magnetic element and the surrounding structure 12a to secure the mobile device 20 to the mounting structure 12.

It will be appreciated that other securement mechanisms may be utilized that assist in retained the mobile device 20 to the mounting structure 12. For instance, a surface of the mounting structure may include a "sticky" or "tacky" coating or material that increases the friction between the mobile device 20 and the mounting structure 12. In another aspect, the mounting structure may include one portion of a cooperating structure system, such as hook-and-loop, with the mobile device 20 including the corresponding portion. In another aspect, the mounting structure 12 may include a cutout that corresponds to a protrusion that extends from the mobile device 20. In another aspect, the mounting structure 12 may include one or more suction devices.

The mounting structure 12 and the base surface 12b may include the wireless charging unit 18 fixed thereto. The wireless charging unit 18 may be fixed to the mounting structure 12 in a position that will place the wireless charging unit 18 in close proximity to the mobile device 20 when the mobile device is secured to the mounting structure 12.

In one approach, the wireless charging unit 18 may be integrated into a body portion of the mounting structure 12, below or embedded into the base surface 12b. In another approach, the charging unit 18 may be a separate component that is affixed or attached to the base surface 12b and configured to be disposed between the mobile device 20 and the base surface 12b when the mobile device 20 is held on the mounting structure 12. In another aspect, the charging unit 18 may be a separate structure and disposed behind the base surface 12b, such that the base surface 12b is disposed between the mobile device 20 and the charging unit 18.

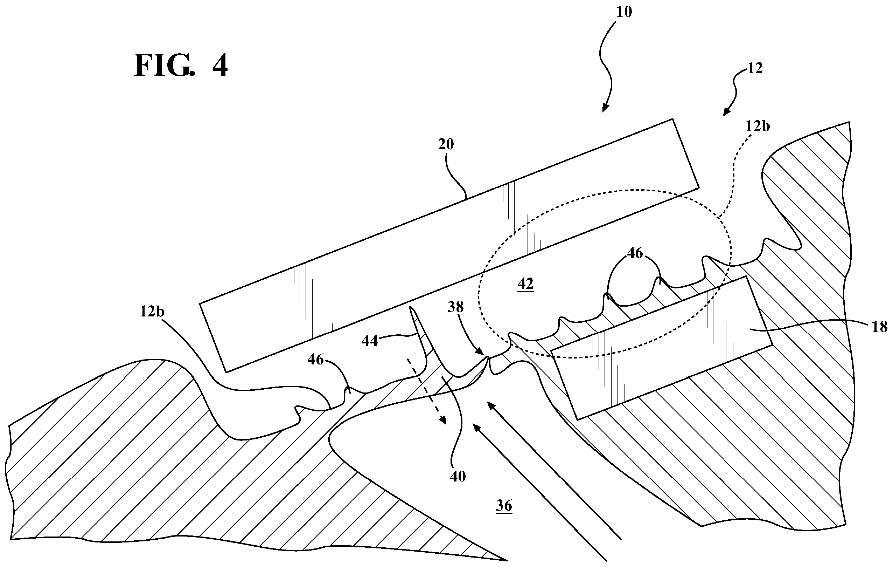

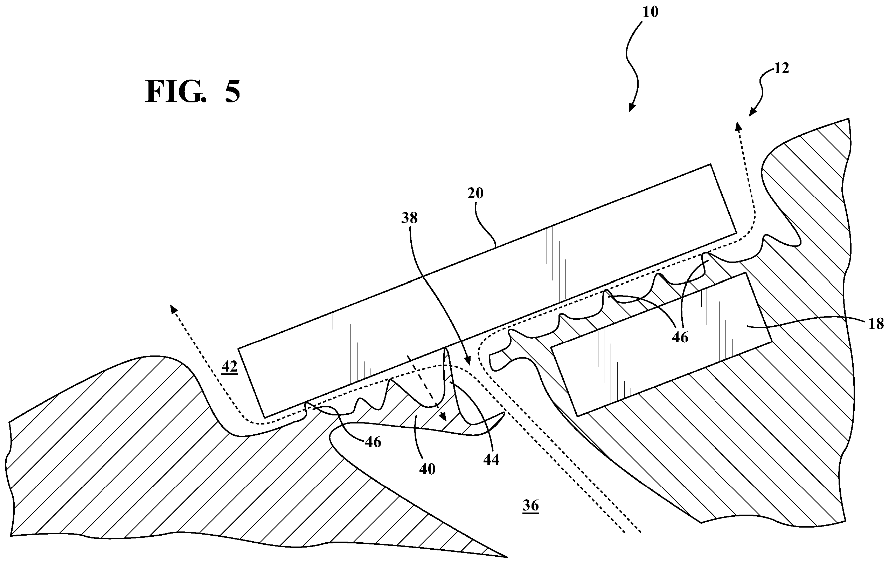

The wireless charging unit 18 may be disposed across substantially the entire base surface 12b of the mounting unit 12, as shown in Figure 3. The mobile device 20 may therefore be charged wirelessly over a broader range of placement relative to the mounting structure 12, as compared to the wireless charging unit 18 being limited to a specific location. However, if desired, the wireless charging unit 18 may be located at a more limited location if concerns over the variable placement of the mobile device 20 are limited, as shown in Figures 4 and 5.

The mounting structure 12 may also include a non-slip coating, such as a rubber or elastomeric material that may improve the grip of the mounting structure 12. In one approach, the mounting structure 12 and the base surface 12b thereof may be oriented such that the mobile device 20 may lay generally flat on the base surface 12b, such that the non-slip coating will frictionally retain the mobile device 20 in place and prevent or otherwise limit sliding of the mobile device 20 in response to vehicle maneuvers.

The mounting structure 12 is configured to be disposed adjacent an area of the vehicle interior where the mounting structure 12 may be exposed to cooling air provided by the vehicle HVAC system 16.

The mounting structure 12 may be integrated into the interior structure of the vehicle 15, such as a vehicle console 30 typically in front of the vehicle driver and within reaching distance of the driver. The mounting structure 12 may be formed, at least partially, in the structure 14 used for the vehicle console 30. It will be appreciated that mounting structure 12 may also be disposed near other occupants of the vehicle, such as the passenger seat adjacent the driver, or in other locations of the vehicle where cooling outlets are disposed, and that the reference to the driver and the vehicle console are one example.

The HVAC system 16 of the vehicle includes a plurality of air outlets 32 disposed at different locations across the vehicle console 30. The air outlets 32 may include a mechanism for selectively opening and closing the air outlets 32. The air outlets 32 are configured to provide forced air into the vehicle cabin to provide heating or cooling to the vehicle cabin as is typical.

In one approach, the mounting structure 12 may be arranged on the vehicle console 30 adjacent the openings defined by the air outlets 32. For example, as shown in Figure 1, the mounting structure 12 could be placed at the locations of the vehicle structure 14 that are adjacent the outlets 32. The location of the mounting structure 12 may be selected based on other vehicle requirements for components that are typically disposed on the vehicle console 30 in the same general area, such as the controls for vehicle audio and control of the HVAC system 16.

With reference to Figure 2 and 3, the HVAC system 16 may also include internal passageways 34 in which the forced air is provided from the HVAC system toward the air outlets 32. The system 10 includes a supplemental passageway 36 configured for providing forced air from the HVAC system toward the location of the mounting structure 12. The system 10 also includes a supplemental air outlet 38 disposed at the end of the supplemental passageway 36, where the supplemental air outlet 38 is disposed at the location of the mounting structure 12, such that the forced air provided by the HVAC system 16 may exit the supplemental passageway 36 and contact and/or flow past and/or through the mounting structure 12 that is designed to house or secure the mobile device 20. The forced air from the HVAC system 16 may therefore be diverted toward the mobile device 20 via the supplemental passageway 36 and the supplemental air outlet 38.

The wireless charging unit 18 may be disposed adjacent the supplemental air outlet 38. For example, the wireless charging unit 18 may be disposed around the supplemental air outlet 38, above or below the supplemental air outlet 38, or to the side of the supplemental air outlet 38, so long as the wireless charging unit 18 is disposed close enough to the mobile device 20 when the mobile device 20 is secured by the mounting structure 12.

In one approach, the system 10 may not include a wireless charging unit. Wireless charging is typically an additional feature provided on many mobile devices 20, but not all mobile devices include the ability to be charged wirelessly. Most mobile devices may also be charged by a charging cable configured to cooperate with the charging port of the particular mobile device. In the case of the system 10 not including a wireless charging unit, the mounting structure 12 may still retain the mobile device 20 in a position adjacent the supplemental air outlet 38, with device charging being provided by a charging cable compatible with the mobile device 20. The system 10 may still include the mobile charging unit 18, even if the mobile device 20 does support wireless charging, with the wireless charging unit 18 simply going unused.

As shown in Figure 4 and 5, with further reference to the mounting structure 12 and the supplemental air outlet 38, the base surface 12b of the mounting structure 12 may be configured to allow forced air to be provided on the surface of the mobile device 20 when the mobile device 20 is secured to the mounting structure 12. The mounting structure 12 includes a moveable flap 40 that is configured to be closed when the mobile device 20 is removed (Figure 4), and configured to be open when the mobile device 20 is secured on the mounting structure 12 (Figure 5). The flap 40 may opens automatically in response to mounting the mobile device 20. In another aspect, other metering device or open/close device, may be opened and/or adjusted manually by the user, such as a manual gate where the user can adjust the cooling air mass flow.

In one form, the flap 40 may be made from a flexible and resilient material, having a nominal position that corresponds to a closed position, such that the flap 40 is biased toward the closed position. The flap 40 may have various forms that will open in response to placing the mobile device 20 on the flap. For example, the opening mechanism of the flap 40 may be in the form of a rotationally symmetric nub which opens orifices when a force is applied on the nub, or the flap 40 may include a living hinge that is configured to permit the flap 40 to pivot in response to a force exerted against the bias. The flap 40 may alternatively be configured to include a mechanical hinge with a spring bias or other biasing mechanism that biases the flap 40 into the closed position. The flap 40 may be in the form of a single flap 40, or may be in the form of a multi-piece flap, with each piece having hinge functionality to allow the flap to open and to return the flap 40 to the closed position. In another aspect, the flap 40 may be in the form of a poppet-type mechanism.

The mounting structure 12 may define a recess 42 into which the mobile device 20 may be placed. The base surface 12b may be at the bottom of the recess 42, and the base surface may be at least partially defined by an outer surface of the flap 40.

The flap 40 includes one or more projections 44 that may have a height within the recess 42 generally corresponding to the depth of the recess 42. Accordingly, when the mobile device 20 is not disposed within the recess 42, the projection 44 does not project beyond the opening of the recess 42, such that the projection 44 will not project out of the recess 42. In another approach, the projection 44 may project out of the recess, or may project to a height that is inward from the opening of the recess 42. It will be appreciated that different heights of the projection 44 may affect the degree to which the flap 40 is opened. However, the degree to which the flap 40 opens may also depend on the extent to which the mobile device 20 is inserted into the recess 42. The height of the recess 42 and the height of the projection 44, and the relative height between them, may vary according to design needs and the ever-changing shapes and designs of mobile devices.

The height of the projection 44 is configured to be large enough such that when the mobile device 20 is seated in the mounting structure 12, the back of the mobile device 20 will force the projection 44 down toward the supplemental passageway 36, such that the flap 40 will move sufficiently inward into the supplemental passageway 36 to create an opening for forced air to flow through the supplemental air outlet 38. The flap 40 need not open fully for forced air to be able to escape through supplemental air outlet 38 and to contact the mobile device.

With reference to Figure 5, with the mobile device 20 seated in the mounting structure 12, the flap 40 is opened and air may flow through the supplemental air outlet 38. The forced air may therefore directly contact the portion of the mobile device 20 that faces the supplemental passageway 36. In the event the forced air is blocked by the mobile device 20 covering the supplemental air outlet 38, the forced air will be circulated back down the supplemental passageway 36 away from the mobile device 20, with an additional supply of forced air continuing to contact the exposed portion of the mobile device 20.

In one approach, the mounting structure 12 may include a plurality of nubs 46 that project from the base surface 12b outwardly in a direction toward the mobile device 20. The nubs 46 may be generally evenly distributed over the base surface 12b, including the outward facing surface of the flap 40. The nubs 46 may be in the form of spikes or dimples or the like. The outer tips of the nubs 46 will contact the facing surface of the mobile device 20 when the mobile device 20 is placed in the mounting structure 12, as shown in Figure 5. The nubs 46 space the surface of the mobile device 20 away from the ultimate bottom surface of the mounting structure 12, such that forced air flowing out of the supplemental passageway 36 through the supplemental air outlet 38 may travel across the surface of the mobile device 20 and around the mobile device 20 and into the vehicle cabin. In this approach, almost the entire facing surface of the mobile device 20 may be contacted by the flowing air that exits the supplemental air outlet 38.

The nubs 46 may be distributed in a generally even distribution with consistent spacing, or may be distributed with a variable spacing. In one aspect, the nubs 46 may be more densely distributed in the middle of the recess 42 relative to the perimeter of the recess 42. In one aspect, the nubs 46 may be more densely distributed at the perimeter. In one aspect, the nubs 46 may have the same size and shape. In another aspect, the nubs 46 may have different sizes and/or shapes. In one aspect, the nubs 46 may be arranged and or sized/shaped randomly across the recess 42.

During operation of the HVAC system 16, the forced air provided by the HVAC system 16 may flow through the various passageways to provide cool air or warm air into the vehicle cabin, depending on the heating/cooling desires of the user. In instances where the air conditioning is operating to cool the vehicle, the cool air provided by the HVAC system 16 can advantageously be diverted or provided into the supplemental passageway 36, where the air will operate to cool the mobile device 20 when the mobile device 20 is disposed in the mounting structure 12 and the flap 40 is closed.

When the mobile device 20 is removed from the mounting structure 12 and the flap 40 is closed, the cooled air that is provided into the supplemental passageway 36 may be blocked by the flap 40, such that the cooled air will not exit through the supplemental air outlet 38. Accordingly, the cooled air may be efficiently re-routed into other passageways in the HVAC system 16, where it may exit through one of the other air outlets 32 to cool the vehicle cabin as desired. However, in general, the passageway 36 and the air flow into and potentially back out of the passageway 36 when the outlet 38 is closed will not significantly affect the other outlets and passageways of the HVAC system.

In one approach, the supplemental passageway 36 may include an internal flap 48 disposed on the supplemental passageway 36 that may operate to block the supplemental passageway 36. It may be desirable to block the supplemental passageway 36 when cool air is not being provided, or when hot air is being provided during a heating operation of the HVAC system 16. The internal flap 48 may operate similar to other internal flaps of known HVAC systems, which control which passageways and vents can receive and output the forced air depending on the desires of the user. For example, in a defrost mode, forced air may be directed toward the windshield, or forced air may be directed toward the driver's feet in other instances. Thus, in response to a demand for cabin heating, the internal flap 48 may be closed, to limit additional hot air from reaching the mobile device 20, which can affect the cooling. In another aspect, the HVAC system may be arranged such that only cool air can reach the outlet 38.

However, it will be appreciated that the internal flap 48 may be excluded, even in instances where warm/hot air is being provided. In some cases, the convection provided by the flowing air across the mobile device 20 is sufficient to reduce the heat of the mobile device 20, even in instances where the air being provided is warm. Even if the air is hotter than the device 20, the air flow may still cool the device 20 due to the convection provided by the airflow, if the surrounding air combines with the warmer air being provided to produce an air temperature that is approximately the same or lower than the temperature of the device surface. It will be appreciated that even if the combined air temperature is higher than the device 20, an increase in the surface temperature of the device 20 will be limited to the combined air temperature, and if the device 20 subsequently heats to a temperature higher than the combined air temperature, the device 20 will thereafter be cooled, because the combined air temperature will then be less than the temperature of the device 20. However, typically, the temperature of the warm air provided by the HVAC system 16 will still be less that the temperature of the mobile device 20 in an overheated or highly heated state, and therefore even warm air provided by the HVAC system 16 can still cool the device 20 from an overheated state, and may still provide device cooling benefits relative to an overheated mobile device 20 that is disposed in relatively stagnant air.

The above description has referred to mobile devices 20 that are being charged while mounted to the mounting structure 12. It will be appreciated that the cooling functionality will still be provided even when the mobile device 20 is not plugged in or receiving power from a wireless charging unit 18 or other charging mechanism. The benefits of cooling the device 20 are still present if the device 20 is not charging, because the device 20 may generate heat and benefit from cooling simply by being turned on and/or in use. In some cases, the user may be provided with a toggle feature than can turn off the wireless charging unit 18, similar to unplugging the charging cable. This may be desirable when the device 20 is fully charged or nearly fully charged, in which the user may wish to prevent over-charging of the device 20.

The above description therefore provides for a simple and cost-effective system for mounting a mobile device 20, such as a smartphone or tablet or similar device, to vehicle structure, which allows for cooling of the device 20 in addition to charging of the device 20 when mounted.

A method for cooling the mobile device 20 is also provided by the description herein. The method includes installing a mobile device 20 on the mounting structure 12 of the vehicle. The method also includes providing forced air from the HVAC system 16 directly to the mobile device 20, such that the forced air contacts the mobile device 20 and cools the mobile device. The method 20 also includes opening the supplemental air outlet 38 in response to attaching the device 20 to the mounting structure, and also includes closing the supplemental air outlet 38 in response to removing the mobile device 20 from the mounting structure 12. The supplemental air outlet 38 may is closed automatically. The method also includes charging the mobile device 20 during the cooling operation. The mounting structure 12 may include the wireless charging unit 18, or the charging power may be provided by a charging cable.

Obviously, many modifications and variations of the present invention are possible in light of the above teachings and may be practiced otherwise than as specifically described while within the scope of the appended claims.

## Claims

1. A system (10) for mounting and cooling a mobile device (20) in a vehicle (15), the system (10) comprising:
a mounting structure (12) adapted to be disposed within a vehicle cabin, the mounting structure (12) including a base surface (12b);
a supplemental air outlet (38) disposed adjacent the base surface (12b) of the mounting structure (12); and
a supplemental passageway (36) in fluid communication with the supplemental air outlet (38) and adapted to be in fluid communication with a source of forced air from a vehicle HVAC system (16);
wherein the system (10) is adapted such that forced air from the vehicle HVAC system (16) can flow through the supplemental passageway (36) and out of the supplemental air outlet (38) for cooling a mobile device (20) when the mobile device (20) is retained by the mounting structure (12),
**characterized in that** the mounting structure (12) includes a flap (40) having an open position for allowing air to flow through the supplemental air outlet (38) and a closed position for preventing air from flowing through the supplemental air outlet (38), wherein the flap (40) is biased toward the closed position, wherein the flap (40) includes a projection (44) extending therefrom in a direction opposite a direction of insertion of the mobile device (20) onto the mounting structure (12),
wherein the system (10) is adapted such that insertion of the mobile device (20) onto the mounting structure (12) causes the flap (40) to move from the closed position to the open position due to the back of the mobile device (20) forcing the projection (44) down toward the supplemental passageway (36), and removal of the mobile device (20) from the mounting structure (12) causes the flap (40) to move from the open position to the closed position.

2. The system (10) of claim 1, wherein the base surface (12b) includes a plurality of nubs (46) projecting from the base surface (12b), when the mobile device (20) is retained by the mounting structure (12) the nubs (46) are configured to space the surface of the mobile device (20) facing the nubs (46) away from the base surface (12b) such that forced air flowing out of the supplemental passageway (36) through the supplemental air outlet (38) may travel across the facing surface of the mobile device (20) and around the mobile device (20) and into the vehicle cabin.

3. The system (10) of claim 1, wherein the mounting structure (12) defines a recess (42) into which the mobile device (20) may be placed.

4. The system (10) of claim 1, wherein the supplemental passageway (36) includes an internal flap (48) disposed on the supplemental passageway (36) that may operate to block the supplemental passageway (36).

5. The system (10) of claim 1, wherein the mounting structure (12) further includes a wireless charging unit (18) disposed in a position being adapted to be in close proximity to the mobile device (20) when the mobile device (20) is retained by the mounting structure (12).

## Patentansprüche

1. System (10) zur Montage und zur Kühlung einer mobilen Vorrichtung (20) in einem Fahrzeug (15), wobei das System (10) aufweist:
eine Montagestruktur (12), die ausgebildet ist, um innerhalb einer Fahrgastzelle angeordnet zu werden, wobei die Montagestruktur (12) eine Basisfläche (12b) aufweist,
einen zusätzlichen Luftauslass (38), der angrenzend an die Basisfläche (12b) der Montagestruktur (12) angeordnet ist, und einen zusätzlichen Durchlass (36) in Fluidverbindung mit dem zusätzlichen Luftauslass (38) und der ausgebildet ist, um in Fluidverbindung mit einer Quelle von Zwangsluft von einem Fahrzeug-HVAC- System (16) zu stehen,
wobei das System (10) so ausgebildet ist, dass Zwangsluft von dem Fahrzeug-HVAC- System (16) durch den zusätzlichen Durchlass (36) und außerhalb des zusätzlichen Luftdurchlasses (38) zum Kühlen einer mobilen Vorrichtung (20) strömen kann, wenn die mobile Vorrichtung (20) durch die Montagestruktur (12) gehalten wird,
**dadurch gekennzeichnet, dass** die Montagestruktur (12) eine Klappe (40) mit einer offenen Position zum Erlauben, dass Luft durch den zusätzlichen Luftauslass (38) strömt, und einer geschlossenen Position zur Verhinderung, das Luft durch den zusätzlichen Luftauslass (38) strömt, aufweist, wobei die Klappe (40) zu der geschlossenen Position vorgespannt ist, wobei die Klappe (40) einen Vorsprung (44) aufweist, der sich in einer Richtung davon erstreckt, die entgegengesetzt zu der Richtung des Einbringens der mobilen Vorrichtung (20) in die Montagestruktur (12) ist,
wobei das System (10) so ausgebildet ist, dass das Einbringen der mobilen Vorrichtung (20) in die Montagestruktur (12) verursacht, dass sich die Klappe (40) von der geschlossenen Position in die offene Position aufgrund dessen bewegt, dass die Rückseite der mobilen Vorrichtung (20) den Vorsprung (44) nach unten zu dem zusätzlichen Durchlass (36) zwängt, und wobei ein Entfernen der mobilen Vorrichtung (20) aus der Montagestruktur (12) verursacht, dass sich die Klappe (40) von der offenen Position in die geschlossene Position bewegt.

2. System nach Anspruch 1, wobei die Basisfläche (12b) eine Anzahl von Noppen (46) aufweist, die sich von der Basisfläche (12b) erstrecken, wobei, wenn die mobile Vorrichtung (20) durch die Montagestruktur (12) gehalten wird, die Noppen (46) ausgebildet sind, um die Fläche der mobilen Vorrichtung (20), die zu den Noppen (46) gerichtet sind, von der Basisfläche (12b) zu beabstanden, sodass Zwangsluft, die aus dem zusätzlichen Durchlass (36) durch den zusätzlichen Luftauslass (38) strömt, über die gerichtete Fläche der mobilen Vorrichtung (20) und um die mobile Vorrichtung (20) und in die Fahrgastzelle gelangen kann.

3. System (10) nach Anspruch 1, wobei die Montagestruktur (12) eine Ausnehmung (42) definiert, in der die mobile Vorrichtung (20) platziert werden kann.

4. System (10) nach Anspruch 1, wobei der zusätzliche Durchlass (36) eine innere Klappe (48) aufweist, die an dem zusätzlichen Durchlass (36) angeordnet ist, die betrieben werden kann, um den zusätzlichen Durchlass (36) zu blockieren.

5. System (10) nach Anspruch 1, wobei die Montagestruktur (12) ferner eine drahtlose Ladeeinheit (18) aufweist, die in einer Position angeordnet ist, die ausgebildet ist, um in enger Nähe zu der mobilen Vorrichtung (20) zu sein, wenn die mobile Vorrichtung (20) in der Montagestruktur (12) gehalten ist.

## Revendications

1. Système (10) destiné au montage et au refroidissement d'un dispositif mobile (20) dans un véhicule (15), le système (10) comprenant :
une structure de montage (12) adaptée pour être disposée à l'intérieur d'un habitacle de véhicule, la structure de montage (12) incluant une surface de base (12b) ;
une sortie d'air supplémentaire (38) disposée de manière adjacente à la surface de base (12b) de la structure de montage (12) ; et
une voie de passage supplémentaire (36) en communication fluidique avec la sortie d'air supplémentaire (38) et adaptée pour être en communication fluidique avec une source d'air forcé provenant d'un système CVC (16) de véhicule ;
dans lequel le système (10) est adapté de telle sorte que l'air forcé provenant du système CVC (16) de véhicule peut s'écouler à travers la voie de passage supplémentaire (36) et hors de la sortie d'air supplémentaire (38) pour refroidir un dispositif mobile (20) quand le dispositif mobile (20) est maintenu par la structure de montage (12),
**caractérisé en ce que** la structure de montage (12) inclut un abattant (40) ayant une position ouverte pour permettre à l'air de s'écouler à travers la sortie d'air supplémentaire (38) et une position fermée pour empêcher l'air de s'écouler à travers la sortie d'air supplémentaire (38), dans lequel l'abattant (40) est sollicité vers la position fermée, dans lequel l'abattant (40) inclut une projection (44) s'étendant depuis celui-ci dans une direction opposée à une direction d'insertion du dispositif mobile (20) jusque sur la structure de montage (12),
dans lequel le système (10) est adapté de telle sorte qu'une insertion du dispositif mobile (20) jusque sur la structure de montage (12) amène l'abattant (40) à se déplacer depuis la position fermée jusqu'à la position ouverte dû à l'arrière du dispositif mobile (20) qui force la projection (44) vers le bas vers la voie de passage supplémentaire (36), et de telle sorte qu'un retrait du dispositif mobile (20) hors de la structure de montage (12) amène l'abattant (40) à se déplacer depuis la position ouverte jusqu'à la position fermée.

2. Système (10) selon la revendication 1, dans lequel la surface de base (12b) inclut une pluralité de saillies (46) se projetant depuis la surface de base (12b), quand le dispositif mobile (20) est maintenu par la structure de montage (12), les saillies (46) sont configurées pour espacer la surface du dispositif mobile (20) en vis-à-vis des saillies (46) en éloignement de la surface de base (12b de telle sorte que l'air forcé s'écoulant hors de la voie de passage supplémentaire (36) à travers la sortie d'air supplémentaire (38) peut circuler à travers la surface en vis-à-vis du dispositif mobile (20) et autour du dispositif mobile (20) et jusque dans l'habitacle de véhicule.

3. Système (10) selon la revendication 1, dans lequel la structure de montage (12) définit un évidement (42) dans lequel le dispositif mobile (20) peut être placé.

4. Système (10) selon la revendication 1, dans lequel la voie de passage supplémentaire (36) inclut un abattant interne (48) disposé sur la voie de passage supplémentaire (36) qui peut fonctionner pour bloquer la voie de passage supplémentaire (36).

5. Système (10) selon la revendication 1, dans lequel la structure de montage (12) inclut en outre une unité de chargement sans fil (18) disposée dans une position qui est adaptée pour être à proximité immédiate du dispositif mobile (20) quand le dispositif mobile (20) est maintenu par la structure de montage (12).
